# EUROPEAN PATENT APPLICATION

(11) **EP 1 994 994 A1**
(43) Date of publication of application: **26.11.2008**
(21) Application number: 07009869.4
(22) Date of filing: 17.05.2007
(51) Int. Cl.: B08B 9/02

(54) **Method for the removal of sediments, fouling agents and the like from ducts and tanks, and apparatus adapted to perform the said method**

(71) Applicant: M.E.S. S.r.l., 16011 Arenzano GE (IT)
(72) Inventor: Miraglia, Francesco, 16011 Arenzano (GE) (IT)
(74) Representative: Pennacino, Enrico

(57) **Abstract**

Method for removing sediments, fouling agents and the like from fluid, in particular liquid, ducts and/or tanks, characterized in that said method comprises applying an ultrasound vibration to a plurality of points of the structure, duct or tank to be treated, said ultrasound vibration being continuously applied outside said structure at given frequency and power; and apparatus for carrying out said method.

## Description

Build-up of debris or fouling agents in ducts and/or tanks carrying or containing impure or otherwise sediment-generating liquids actually represents a very common issue in several fields of the technique.

One of the fields most affected by this problem is ship-building, and particularly medium-high class pleasure boating. Inboard engines are provided with a seawater cooling system wherein seawater is pumped up and subsequently discharged; seawater contains various microorganisms of both animal and plant origin, which exhibit a tendency to establish and proliferate in cooling system ducts. This kind of sediments causes remarkable problems and damages, even of high economic significance, to engine assembly. This problem can be solved by the use of washings with sodium hypochlorite solutions or other oxidizing agents capable of attack such microorganisms. Of course, such substances are highly polluting and their use is encountering more and more limitations due to the risk for environment.

An aim of the present invention is to provide a method for removing sediments, fouling agents and the like from liquid ducts and/or tanks without using aggressive systems which can damage both the structure to be restored and the surrounding environment.

Another aim of the present invention is to provide an apparatus for carrying out such method, said apparatus being simple to be made and applied to various kinds of structures affected by similar problems due to sediments and fouling.

Thus, an object of the present invention is a method for removing sediments, fouling agents and the like from fluid, in particular liquid, ducts and/or tanks, characterized in that said method comprises applying an ultrasound vibration to a plurality of points of the structure, duct or tank to be treated, said ultrasound vibration being continuously applied outside said structure at given frequency and power.

Another object of the present invention is an apparatus for applying ultrasounds to a structure such as a duct, tank or the like, comprising suitably powered ultrasound generating means, transducer means for the ultrasounds generated from said ultrasound generating means, said transducer means being connected to said ultrasound generating means through connecting means and being coupled to said structure through suitable coupling elements.

Other advantages and features of the present invention will be apparent from the following description of an embodiment thereof, which is provided by way of illustration, and not by way of limitation, with reference to the accompanying drawings, wherein:
Figure 1 is a schematic representation of an embodiment of the apparatus according to the present invention; and
Figure 2 is a detail of Figure 1 with cross-sectioned parts.

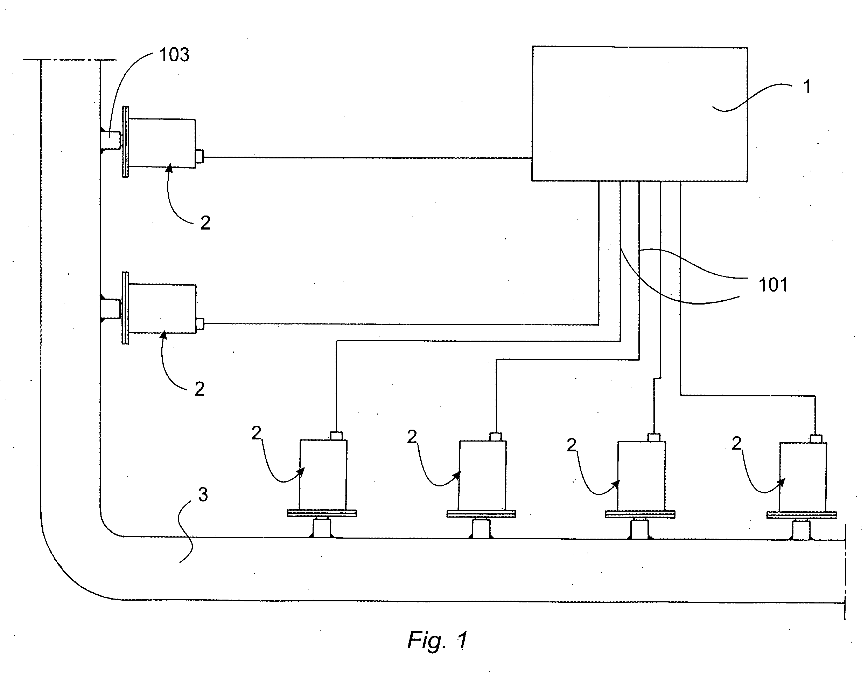

Figure 1 illustrates an embodiment of an apparatus for carrying out the method according to the present invention; reference numeral 1 denotes an ultrasound generating unit which is connected, through a plurality of wires 101, to a plurality of transducer assemblies 2 which are coupled to a duct 3 through coupling elements 103.

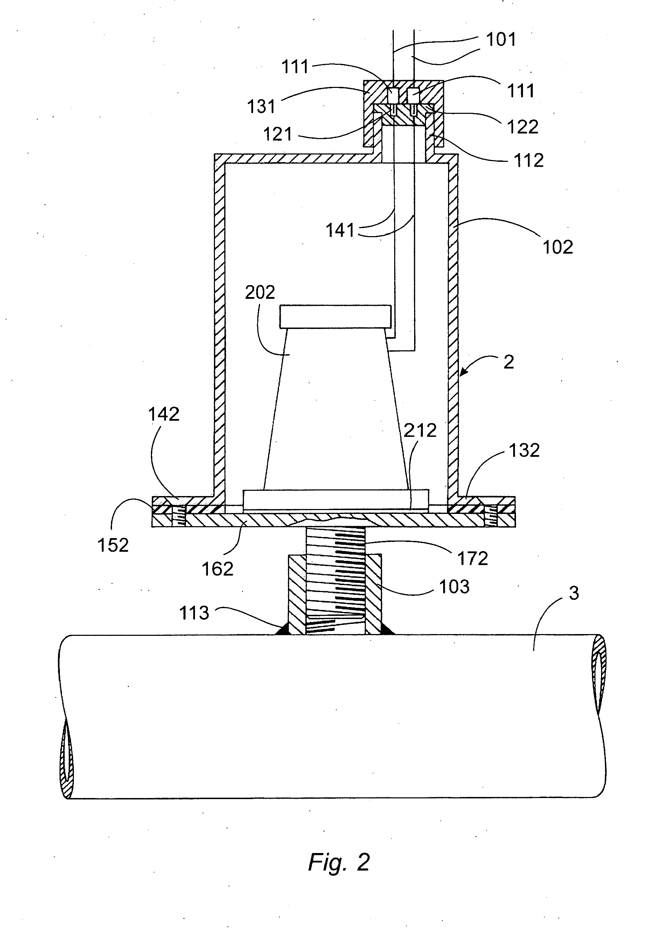

Figure 2 shows a detail of one transducer assembly 2 coupled to the duct 3. The transducer assembly 2 comprises a substantially bell-shaped box-like body 102 whose open end is provided with a radially-projecting flange 132 for securing the body 102 to a plate 162 through screws 142. A transducer 202 is attached to the plate 162 through an adhesive resin layer 212, said transducer 202 being connected, through wires 141, to connectors 121 fitted in an insert 122 which engages the opening of a tube piece 112 at the bottom of the body 102 of the assembly 2. A cap 131 is mounted to the tube piece 112, and this cap houses connectors 111 for connecting wires 101 from the ultrasound generating unit 1 to the transducer assembly 2, see Figure 1. The plate 162 is axially provided with a threaded pin 172 which is coupled to a threaded sleeve 103 welded to the outer wall of said duct 3 through a welding seam 113; an annular sealing element 152 is provided between the plate 162 and the flange 142 of the body 102.

The method and apparatus for removing sediments, fouling agents and the like according to the present invention are further explained in the following. Taking the duct 3 as an example of a cooling duct for an inboard propulsion engine of a boat, build-up of fouling mainly due to microbiological components in seawater (phytoplankton, zooplankton) is a known problem; according to the method of the invention, this build-up can be prevented continuously applying ultrasounds at a frequency in the range of 10 to 40 kHz, preferably in the range of 17 to 26 kHz, to the duct 3. The frequency of the applied vibration mainly depends on the wall thickness of the structure to be treated; generally, the larger the wall thickness is, the higher the frequency of the applied vibration is. The power used is usually in the range of 300 Watts to 2 kWatts, and preferably in the range of 600 Watts to 1,000 Watts. The application to this type of duct is only one among different examples of application for the method and apparatus according to the present invention, which can actually be used whenever a build-up of sediments and/or fouling agents exists in structures which contain and/or carry fluids.

The continuous application of ultrasound inhibits the formation of build-ups on the wall of the ducts and prevents the formation of fouling that can cause malfunctions in the cooling system. In this case, the main problem to be solved is how ultrasounds can be applied to the structure to be treated; in fact, it is necessary that vibration impacting the structure itself, e.g., a duct, is as smooth as possible, while avoiding that transducer means hinder the flow within the structure and that the morphology of the structure is dramatically modified. Furthermore, because of the substantially circular cross-section of a duct, it is necessary that vibration is effectively and completely transferred to the highest degree without substantially changing the structure of transducers. To achieve these results, the unique transducer is fitted into a transducer assembly of suitable construction such as to be coupled with the structure to be treated in a very simple way, said structure having in turn been modified to a very small extent. In order to install the transducer assembly in a stable and perfectly functional way according to the invention, a threaded sleeve is simply welded to the external surface of the duct.

The transducer itself is housed in a substantially sealed container body 102, and it is attached to a face of a plate through a suitable adhesive such as an epoxy resin, a polystyrene resin or the like, said plate being coupled to the sleeve which is welded to the duct. In this way, vibration is transferred to the duct, and this type of connecting system is well suited for structures greatly varying in shape and size, such as to allow for a wide use of the method and apparatus according to the present invention.

Advantageously, the transducer assembly 2 is connected to wires 101 through connecting means 111, 121 which enable its complete removal and replacement. Moreover, the insert 122 in the tube piece 112, along with the cap 131, further assure sealing within the transducer assembly 2 e prevent wear thereof due to the action of external agents.

## Claims

1. Method for removing sediments, fouling agents and the like from fluid, in particular liquid, ducts and/or tanks, **characterized in that** said method comprises applying an ultrasound vibration to a plurality of points of the structure, duct or tank to be treated, said ultrasound vibration being continuously applied outside said structure at given frequency and power.

2. Method according to Claim 1, wherein the application frequency for said ultrasounds is in the range of 10 to 40 kHz.

3. Method according to Claim 2, wherein the application frequency for said ultrasounds is in the range of 17 to 26 kHz.

4. Method according to any one of Claims 1 to 3, wherein the power absorbed during the application of said ultrasounds is in the range of 100-2,000 Watts.

5. Method according to Claim 4, wherein the power absorbed during the application of said ultrasounds is in the range of 600-1,000 Watts.

6. Apparatus for applying ultrasounds to a structure (3) such as a duct, tank or the like, comprising suitably powered ultrasound generating means (1), transducer means (2, 202) for the ultrasounds generated from said ultrasound generating means (1), said transducer means (2, 202) being connected to said ultrasound generating means (1) through connecting means (101, 111, 121, 141) and being coupled to said structure (3) through suitable coupling elements (172, 103).

7. Apparatus according to Claim 6, wherein said transducer means comprise a transducer assembly (2) comprising a container body (102) which contains a transducer element (202), said transducer element (202) being connected to the inner face of a wall (162) of said container body (102), said wall being provided outside a coupling element (172) to be coupled with a corresponding coupling element (103) secured to said structure (3).

8. Apparatus according to Claim 7, wherein said coupling element of said transducer assembly (2) is a threaded pin (172) which is coupled with a threaded sleeve (103) projecting from said structure (3).

9. Apparatus according to any one of Claims 6 to 8, wherein said connecting means between said transducer means (2) and said ultrasound generating means (1) comprise connecting wires (101) to connect said transducer element (202) to said ultrasound generating means (1), a tube piece (112) being provided on a wall of said container body (102).

10. Apparatus according to Claim 9, wherein an insert (122) is fitted in said tube piece, said insert having disposed therein connecting means (121) connected to said transducer element (202), said connecting means (121) cooperating with connecting means (111) disposed in a covering element (131) externally mounted to said tube piece (112) and connected to said wires (101).

11. Apparatus according to any one of Claims 7 to 10, wherein said transducer element (202) is connected to the wall (162) of said container body (102) through a layer of an adhesive material such as an epoxy resin, a polystyrene resin or the like.
